# EUROPEAN PATENT APPLICATION

(11) **EP 3 168 710 A1**
(43) Date of publication of application: **17.05.2017**
(21) Application number: 16175799.2
(22) Date of filing: 22.06.2016
(51) Int. Cl.: G06F 1/26, H02M 1/36, H02M 3/335

(54) **POWER SUPPLY APPARATUS AND METHOD FOR CONTROLLING POWER SUPPLY APPARATUS**

(30) Priority: 28.07.2015 JP 2015149031
(71) Applicant: FUJITSU LIMITED, 211-8588 Kanagawa (JP)
(72) Inventor: LI, Minglong, Kawasaki-shi, Kanagawa 211-8588 (JP)
(74) Representative: Hutchison, James

(57) **Abstract**

A control contact pin 23 is connected to a GND 110 when an electronic apparatus is connected to an AC adapter 1. The control contact pin 23, when connected to the GND 110, receives an input of a control signal output by the electronic apparatus. A detection unit 109 detects whether the control contact pin 23 is connected to the GND 110 and whether the control contact pin 23 receives the input of the control signal. When the detection unit 109 detects that the control contact pin 23 is not connected to the GND 110 or the control contact pin 23 is connected to the GND 110 and receives the input of the control signal, a control unit 108 stops an operation of a switching unit 106. When the detection unit 109 detects that the control contact pin 23 is connected to the GND 110 and yet does not receive the input of the control signal, the control unit 108 operates the switching unit 106.

## Description

### FIELD

The embodiments discussed herein are related to a power supply apparatus and a method for controlling a power supply apparatus.

### BACKGROUND

An AC (alternating current) adapter can be connected to an electronic apparatus such as a personal computer. The AC adapter converts a commercial AC voltage into a corresponding DC (direct current) voltage and supplies the DC voltage to the electronic apparatus.

The AC adapter serving as a power source for an electronic apparatus such as a personal computer keeps consuming AC standby power even in a condition in which the electronic apparatus is turned OFF or is not connected. For a capacity of 80 W for personal computers, for example, the AC adapter consumes standby power of 200 mW to 300 mW.

AC adapters have hitherto been developed to reduce generation of the standby power. For example, one known technique supplies power from a battery to the electronic apparatus to thereby reduce power loss by the AC adapter when the electronic apparatus is not in use. Another known technique turns ON or OFF an AC-DC converter of the AC adapter according to a power status of the electronic apparatus. Conventional examples are described in Japanese Laid-open Patent Publication No. 2002-062952 and Japanese Laid-open Patent Publication No. 2012-103965.

With the first known technique that supplies power from the battery to the electronic apparatus when the electronic apparatus is turned OFF, however, the AC adapter is connected to the electronic apparatus and the electronic apparatus includes a battery. Specifically, a stand-alone AC adapter has difficulty in reducing the standby power. In addition, a pin on the electronic apparatus side is employed to control a switch on the AC adapter, which makes it difficult to apply the technique to an electronic apparatus that is not so configured.

The second known technique that turns ON or OFF the AC-DC converter according to the power status of the electronic apparatus uses a signal from a special pin provided to the electronic apparatus to turn ON or OFF the AC-DC converter, so that a stand-alone AC adapter has difficulty in reducing the standby power.

Accordingly, it is desirable to provide a power supply apparatus and a method for controlling a power supply apparatus that reduce power consumption regardless of whether in a stand-alone configuration or a configuration connected to an electronic apparatus.

### SUMMARY

The invention is defined by the claims, to which reference should now be made.

According to an embodiment of one aspect of the invention, a power supply apparatus includes: a power supply unit that supplies an electronic apparatus connected to the power supply apparatus with power; a control pin that is connected to a ground when the electronic apparatus is connected to the power supply apparatus and that, when connected to the ground, receives an input of a control signal output by the electronic apparatus; a detection unit that detects whether the control pin is connected to the ground and whether the control pin receives the input of the control signal; and a control unit that, when the detection unit detects that the control pin is not connected to the ground or the control pin is connected to the ground and receives the input of the control signal, stops an operation of the power supply unit and that, when the detection unit detects that the control pin is connected to the ground and yet does not receive the input of the control signal, operates the power supply unit.

### BRIEF DESCRIPTION OF DRAWINGS

Embodiments of the invention are set out, by way of example only, with reference to the following drawings, in which:
FIG. 1 is a block diagram illustrating an AC adapter according to a first embodiment;
FIG. 2 is a block diagram schematically illustrating a personal computer;
FIG. 3 is a diagram illustrating a condition in which a connector of the AC adapter connector is connected to a connector of the personal computer;
FIG. 4 is a flowchart illustrating a mode changeover process performed by the AC adapter according to the first embodiment;
FIG. 5 is a circuit diagram illustrating an AC adapter according to a second embodiment;
FIG. 6 is a diagram illustrating details of a photocoupler; and
FIG. 7 is a table that summarizes voltages and ON/OFF positions of switches and the photocoupler, and operations of an IC.

### DESCRIPTION OF EMBODIMENTS

Preferred embodiments of the present invention will be explained with reference to accompanying drawings.

These embodiments are not intended to limit the scope of the power supply apparatus and the method for controlling a power supply apparatus disclosed in this application in any manner.

### [a] First Embodiment

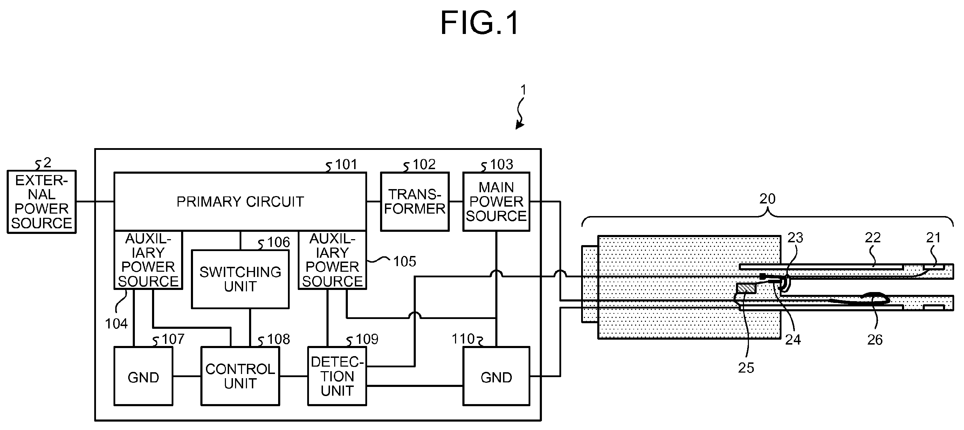

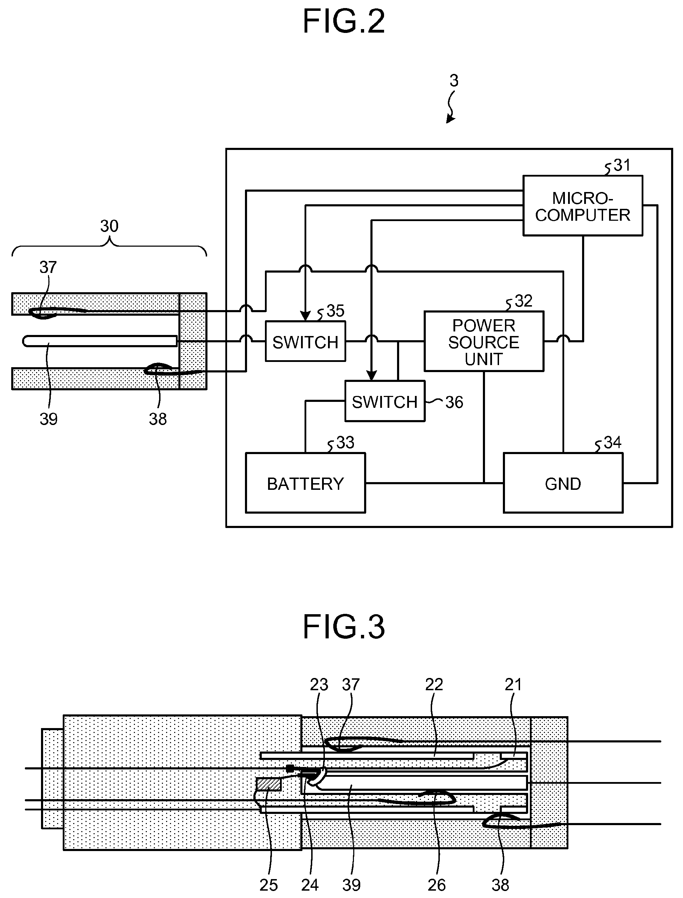

FIG. 1 is a block diagram illustrating an AC adapter according to a first embodiment. FIG. 2 is a block diagram schematically illustrating a personal computer. FIG. 3 is a diagram illustrating a condition in which a connector of the AC adapter connector is connected to a connector of the personal computer. As illustrated in FIG. 1, this AC adapter 1 is connected to an external power source 2. FIG. 1 illustrates a condition in which the AC adapter 1 is not connected to a personal computer 3 illustrated in FIG. 2.

The AC adapter 1 includes a primary circuit 101, a transformer 102, a main power source 103, an auxiliary power source 104, an auxiliary power source 105, a switching unit 106, a ground (GND) 107, a control unit 108, a detection unit 109, and a GND 110.

The AC adapter 1 is connected to the external power source 2. The external power source 2 is an alternating current power source that is, for example, a commercial power source for home use.

The primary circuit 101 receives an input of alternating current electricity from the external power source 2. The electricity input to the primary circuit 101 has a voltage higher than an operating voltage of the personal computer 3. The primary circuit 101, for example, rectifies and/or smoothes the input alternating current electricity before outputting the processed alternating current electricity to the transformer 102.

The transformer 102 receives the input of the alternating current electricity from the primary circuit 101. The transformer 102, while lowering a voltage of the input electricity to a voltage that can be applied to the personal computer 3, converts the alternating current into a direct current. The voltage that can be applied to the personal computer 3 will hereinafter be referred to as an "input voltage". The transformer 102 thereafter outputs to the main power source 103 direct current electricity that has the input voltage to the personal computer 3.

The main power source 103 receives from the transformer 102 the input of the direct current electricity that has the input voltage to the personal computer 3. The main power source 103 then rectifies and/or smoothes the input electricity. The main power source 103 thereafter outputs the direct current electricity having the input voltage to a DC input pin 26 to be described later.

The auxiliary power source 104 is connected to the GND 107. The auxiliary power source 104 receives supply of power from the primary circuit 101. The auxiliary power source 104, because having a load smaller than the personal computer 3 connected thereto, consumes power that is considerably smaller than the main power source 103 does. The auxiliary power source 104 supplies the input power to the control unit 108. The auxiliary power source 104 then has a potential reduced to a potential of the GND 107.

The auxiliary power source 105 is connected to the GND 110. The auxiliary power source 105 receives supply of power from the primary circuit 101. The auxiliary power source 105 also has a load smaller than the personal computer 3 connected thereto. Thus the auxiliary power source 105 consumes power that is considerably smaller than the main power source 103 does. The auxiliary power source 105 supplies the input power to the detection unit 109. The auxiliary power source 105 then has a potential reduced to a potential of the GND 110.

The GND 107 has a reference potential on the side of the AC adapter 1. The GND 110 has a reference potential on the side of the personal computer 3. The reference potential of the GND 110 is lower than the reference potential of the GND 107. In this manner, the reference potential of the GND 107 on the AC adapter 1 side for operating the control unit 108 differs from the reference potential of the GND 110 on the personal computer 3 side for operating the detection unit 109. Hence, the two auxiliary power sources, i.e., the auxiliary power source 104 and the auxiliary power source 105 are provided for operating the control unit 108 and the detection unit 109.

The detection unit 109 is connected to a path that connects to a GND pin 22 via a control contact pin 23. The detection unit 109 receives an input of a switch control signal from the control contact pin 23 and a control signal pin 21. The detection unit 109 uses the switch control signal to detect connection and operating conditions of the personal computer 3. The detection unit 109 outputs a detection result to the control unit 108.

Specifically, when the control contact pin 23 contacts a contact portion 24 and the personal computer 3 does not output a switch control signal having a High value, the detection unit 109 receives an input of a switch control signal having a Low value (potential of the GND 110). When an input of a switch control signal having a Low value is received, the detection unit 109 detects a condition in which the AC adapter 1 is inserted in the personal computer 3 and power supply continues. The condition in which the AC adapter 1 is inserted in the personal computer 3 will be referred to as an "adapter-inserted condition".

When the control contact pin 23 contacts the contact portion 24 and the personal computer 3 outputs a switch control signal having a High value, the detection unit 109 receives an input of a switch control signal having a High value. When the input of the switch control signal having the High value is received, the detection unit 109 detects the adapter-inserted condition and a condition in which power supply can be suspended. In the first embodiment, the condition in which power supply can be suspended corresponds to the case when a sufficient stored power residual amount is available in a battery.

When the control contact pin 23 is not in contact with the contact portion 24, the detection unit 109 does not receive an input of a signal from the control contact pin 23 and the control signal pin 21. Without the input of a swing control signal from the control contact pin 23, the detection unit 109 uses power from the auxiliary power source 105 to determine that a signal having a High value has been input. The detection unit 109 detects a condition in which the AC adapter 1 is yet to be inserted in the personal computer 3. The condition in which the AC adapter 1 is yet to be inserted in the personal computer 3 will hereinafter be referred to as an "adapter-yet-to-be-inserted condition". Additionally, the switch control signal having a High value output by the personal computer 3 is an exemplary "control signal". The signal having a High value is an exemplary "high-power signal". The signal having a Low value is an exemplary "low-power signal".

The detection unit 109 notifies the control unit 108 of the detected condition. It is here noted that a shift into a standby power reduction mode in which the standby power is reduced is preferable in any of the following conditions: specifically, a condition in which the personal computer 3 is yet to be connected, the adapter-inserted condition, and the condition in which power supply can be suspended. Thus, the detection unit 109 notifies the control unit 108 of any of the condition in which the personal computer 3 is yet to be connected, the adapter-inserted condition, and the condition in which power supply can be suspended as a condition enabling a shift into the standby power reduction mode. In the following, the switch control signal having a High value will be simply referred to as a "High switch control signal" and the switch control signal having a Low value will be simply referred to as a "Low switch control signal".

The control unit 108 receives the input of the detection result of the connection and operating conditions of the personal computer 3 from the detection unit 109. When the input of the adapter-yet-to-be-inserted condition is received, the control unit 108 supplies power to the switching unit 106 to thereby energize the switching unit 106. When the input of the condition enabling a shift into the standby power reduction mode is received, the control unit 108 suspends the supply of power to the switching unit 106 to thereby de-energize the switching unit 106.

The switching unit 106 performs control to turn ON or OFF a switch in the primary circuit 101 for conversion from an alternating current to a direct current. Specifically, the switching unit 106 repeatedly turns ON and OFF the switch disposed on a path of the primary circuit 101, so that the alternating current input from the external power source 2 to the primary circuit 101 is converted into a constant pulse voltage.

The switching unit 106 stops operating when the supply of power thereto is suspended by the control unit 108. Alternatively, when the supply of power thereto is executed by the control unit 108, the switching unit 106 turns ON and OFF the switch in the primary circuit 101. The switching unit 106 and the primary circuit 101 form an exemplary "power supply unit".

A main cause of consuming power in the AC adapter 1 is the switching unit 106 turning ON and OFF the switch. Power consumption can be reduced by stopping the turning ON and OFF of the switch by the switching unit 106, so that standby power consumption can be reduced. Thus, the standby power reduction mode is established when the switching unit 106 stops turning ON and OFF the switch. In contrast, the condition in which the switching unit 106 turns ON and OFF the switch is referred to as an "ordinary power supply mode".

A connector 20 includes a control signal pin 21, the GND pin 22, the control contact pin 23, the contact portion 24, and a resistor 25.

The control signal pin 21 is insulated from the GND pin 22. The control signal pin 21 is disposed at a distal end of a cylindrical protrusion that extends from the connector 20 and covers a cylindrical periphery. Specifically, the control signal pin 21, while divided into two parts in FIG. 1, which illustrates a section of the control signal pin 21, is actually a single cylindrical terminal.

The control signal pin 21 is connected to the detection unit 109. As illustrated in FIG. 3, when the connector 20 is connected to a connector 30, the control signal pin 21 contacts a control signal pin 38 of the personal computer 3. The control signal pin 21 outputs to the detection unit 109 a High switch control signal input from the control signal pin 38 that is in contact with the control signal pin 21. When the connector 20 is connected to the connector 30, the GND pin 22 connects to the GND 110 via the resistor 25 and the GND pin 22, as will be described later. The High switch control signal output by the control signal pin 21, however, has a voltage higher than pull-down by the resistor 25. As a result, when the input of the High switch control signal is received from the control signal pin 38, the control signal pin 21 can input the High switch control signal to the detection unit 109.

The GND pin 22 is disposed at a proximal end of the cylindrical protrusion extending from the connector 20 and covers the cylindrical periphery. Specifically, the GND pin 22, while divided into two parts in FIG. 1, which illustrates a section of the GND pin 22, is actually a single cylindrical terminal. The GND pin 22 connects to the GND 110. When the connector 20 is connected to the connector 30 as illustrated in FIG. 3, the GND pin 22 contacts a GND pin 37 of the personal computer 3. This connection establishes a match in the potential between the GND 110 and a GND 34.

The control contact pin 23 is disposed on a path that connects the control signal pin 21 and the detection unit 109. The control contact pin 23 is formed of a flat spring. A surface of the control contact pin 23 in contact with a DC input pin 39 when the connector 20 is connected to the connector 30 is covered with an insulator.

When the connector 20 is disconnected from the connector 30, the control contact pin 23 is spaced away from the contact portion 24 by an elastic force of the flat spring. In this case, the path that extends to the detection unit 109 is open at the control contact pin 23. Specifically, when the connector 20 is disconnected from the connector 30, no signal is input from the control signal pin 21 and the control contact pin 23 to the detection unit 109.

When the connector 20 is connected to the connector 30, the control contact pin 23 receives pressure from the DC input pin 39 to be placed toward the contact portion 24 side and into contact with the contact portion 24. The foregoing motion of the control contact pin 23 results in the path that extends to the detection unit 109 connecting to the GND 110 via the control contact pin 23, the resistor 25, and the GND pin 22. The resistor 25 pulls down the voltage, so that the voltage of the path that extends to the detection unit 109 becomes Low.

When no High switch control signal is input from the personal computer 3 with the connector 20 connected to the connector 30, the control signal pin 21 and the control contact pin 23 output a Low switch control signal to the detection unit 109. When a High switch control signal is input from the personal computer 3 with the connector 20 connected to the connector 30, the control signal pin 21 and the control contact pin 23 output a High switch control signal to the detection unit 109. The control contact pin 23 is an exemplary "control pin".

The contact portion 24 connects to the GND 110 via the resistor 25 and the GND pin 22. The contact portion 24 is disposed in a direction toward which the control contact pin 23 is placed when the connector 20 is connected to the connector 30. When the connector 20 is connected to the connector 30, the contact portion 24 contacts the control contact pin 23. When the connector 20 is disconnected from the connector 30, the contact portion 24 is spaced away from the control contact pin 23.

The resistor 25 is disposed midway on a path that connects the GND pin 22 and the contact portion 24. The resistor 25 has a low resistance value. When the connector 20 is connected to the connector 30, the resistor 25 connects to the GND 110 via the GND pin 22. With the connector 20 connected to the connector 30, the resistor 25 connects to the control contact pin 23 via the contact portion 24. Thus, the resistor 25 pulls down the voltage at the control contact pin 23 to the potential of the GND 110.

When the connector 20 is connected to the connector 30 of the personal computer 3, the DC input pin 26 contacts the DC input pin 39 of the personal computer 3 as illustrated in FIG. 3. With the connector 20 connected to the connector 30, the DC input pin 26 outputs direct current electricity output from the transformer 102 to the DC input pin 39.

With reference to FIG. 2, the personal computer 3 includes the connector 30, a microcomputer 31, a power source unit 32, a battery 33, the GND 34, and switches 35 and 36. The connector 30 includes the GND pin 37, the control signal pin 38, and the DC input pin 39.

The switch 35 is disposed on a path that connects the DC input pin 39 to the power source unit 32 and the battery 33. The switch 35 is turned ON by the microcomputer 31 when direct current electricity supplied from the AC adapter 1 is supplied to the power source unit 32 or the power source unit 32 and the battery 33. When the direct current electricity supplied from the AC adapter 1 is not supplied to the power source unit 32, the switch 35 is turned OFF by the microcomputer 31.

The switch 36 is disposed on a path that connects the power source unit 32 to the battery 33. When the direct current electricity supplied from the AC adapter 1 is input to the battery 33, or when electricity is supplied from the battery 33 to the power source unit 32, the switch 36 is turned ON by the microcomputer 31. When the direct current electricity supplied from the AC adapter 1 is not input to the battery 33, or when the electricity from the battery 33 is not supplied to the power source unit 32, the switch 36 is turned OFF by the microcomputer 31.

The battery 33 is a storage battery built into the personal computer 3. The battery 33 connects to the DC input pin 39 via the switches 35 and 36. The battery 33 also connects to the power source unit 32 via the switch 36. The battery 33 receives from the DC input pin 39 and stores the direct current electricity output from the AC adapter 1. When no input of electricity is received from the AC adapter 1, the battery 33 supplies the power source unit 32 with electricity stored therein.

The microcomputer 31 is an arithmetic operation unit. The microcomputer 31 receives supply of power from the power source unit 32. The microcomputer 31 uses the power supplied from the power source unit 32 to perform arithmetic operations.

In addition, the microcomputer 31 monitors a stored power amount in the battery 33. When the stored power amount in the battery 33 exceeds a predetermined threshold, the microcomputer 31 determines that a sufficient stored power residual amount is available in the battery 33 and the condition in which power supply from the AC adapter 1 can be suspended exists. The microcomputer 31, having determined that the condition in which power supply from the AC adapter 1 can be suspended exists, outputs a High switch control signal to the control signal pin 38.

The power source unit 32 receives from the DC input pin 39 an input of electricity supplied from the AC adapter 1. The power source unit 32 also receives supply of electricity from the battery 33. The power source unit 32 converts the voltage of the electricity input thereto into an operating voltage on which the microcomputer 31 operates and outputs the resultant operating voltage to the microcomputer 31.

The GND 34 has the reference potential on the side of the personal computer 3. The GND 34 connects to the microcomputer 31, the power source unit 32, the battery 33, and the GND pin 37.

The GND pin 37 connects to the GND 34. When the connector 20 is connected to the connector 30, the GND pin 37 connects to the GND pin 22 of the AC adapter 1. This connection causes a potential of the GND pin 22 to be reduced to a potential of the GND 34.

The control signal pin 38 connects to the microcomputer 31. When the connector 20 is connected to the connector 30, the control signal pin 38 connects to the control signal pin 21. When the connector 20 is connected to the connector 30 and a sufficient amount of stored power is available in the battery 33, the control signal pin 38 receives from the microcomputer 31 an input of a High switch control signal. The control signal pin 38 outputs the High switch control signal input thereto to the control signal pin 21.

The DC input pin 39 connects to the power source unit 32 and the battery 33. When the connector 20 is connected to the connector 30, the DC input pin 39 connects to the DC input pin 26. When the connector 20 is connected to the connector 30, the DC input pin 39 presses the control contact pin 23 in an insertion direction to thereby bring the control contact pin 23 into contact with the contact portion 24. The DC input pin 39 then receives an input of direct current electricity from the DC input pin 26. The DC input pin 39 outputs to the power source unit 32 and the battery 33 the direct current electricity input thereto.

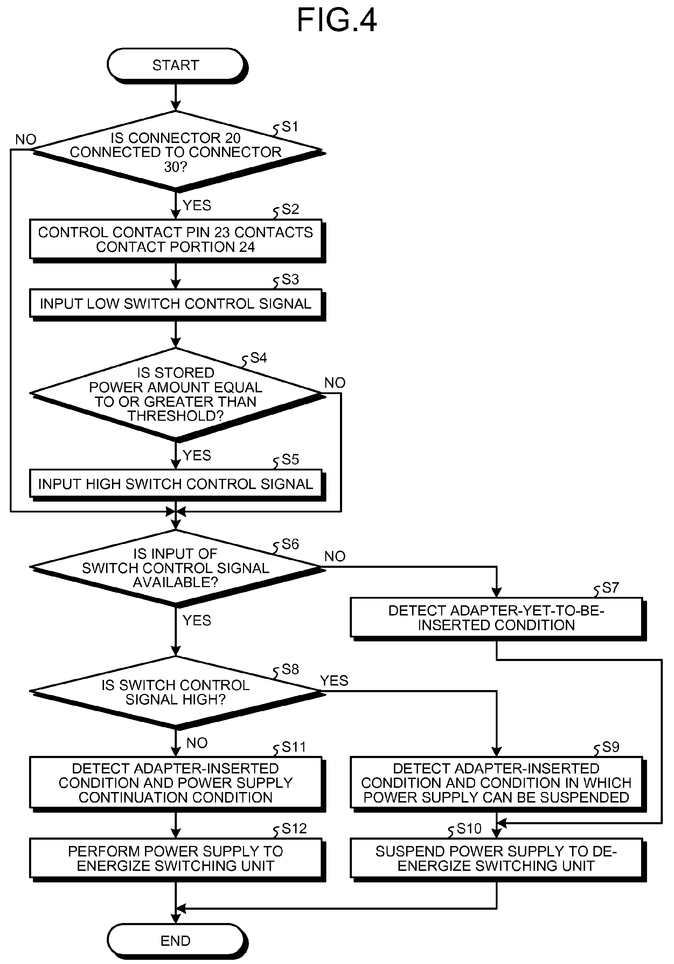

The following describes, with reference to FIG. 4, steps of a mode changeover process performed by the AC adapter 1 according to the first embodiment. FIG. 4 is a flowchart illustrating the mode changeover process performed by the AC adapter according to the first embodiment.

The process branches off depending on whether the connector 20 is connected to the connector 30 (Step S1). When the connector 20 is not connected to the connector 30 (No at Step S1), the process proceeds to Step S6.

When the connector 20 is connected to the connector 30 (Yes at Step S1), the control contact pin 23 is pushed by the DC input pin 39 to come into contact with the contact portion 24 (Step S2). The foregoing step reduces the potential of the control contact pin 23 to the reference potential of the GND 110.

The detection unit 109 receives an input of the Low switch control signal (Step S3).

The microcomputer 31 determines whether the stored power amount in the battery 33 is equal to or greater than the threshold (Step S4). If the stored power amount in the battery 33 is less than the threshold (No at Step S4), the process proceeds to Step S6.

If the stored power amount in the battery 33 is equal to or greater than the threshold (Yes at Step S4), the detection unit 109 receives an input of the High switch control signal (Step S5).

The detection unit 109 determines whether an input of the switch control signal is available (Step S6). If no input of the switch control signal is available (No at Step S6), the detection unit 109 detects the adapter-yet-to-be-inserted condition (Step S7) and notifies the control unit 108 of the condition enabling a shift into the standby power reduction mode. The process then proceeds to Step S10.

If an input of the switch control signal is available (Yes at Step S6), the detection unit 109 determines whether the switch control signal is High (Step S8). If the switch control signal is High (Yes at Step S8), the detection unit 109 detects the adapter-inserted condition and the condition in which power supply can be suspended (Step S9). The detection unit 109 notifies the control unit 108 of the condition enabling a shift into the standby power reduction mode.

The control unit 108 receives the notification of the condition enabling a shift into the standby power reduction mode from the detection unit 109. The control unit 108 then suspends the power supply to the switching unit 106 to de-energize the switching unit 106, thereby effecting a shift into the standby power reduction mode (Step S10).

If the switch control signal is Low (No at Step S8), the detection unit 109 detects the adapter-inserted condition and a power supply continuation condition (Step S11). The detection unit 109 notifies the control unit 108 of the adapter-inserted condition and the power supply continuation condition.

The control unit 108 receives the notification of the adapter-inserted condition and the power supply continuation condition from the detection unit 109. The control unit 108 performs power supply to the switching unit 106 to energize the switching unit 106, thereby effecting a shift into the ordinary power supply mode (Step S12).

In summary, the AC adapter according to the first embodiment, when not connected to the personal computer, shifts into the standby power reduction mode. The AC adapter shifts into the ordinary power supply mode when the AC adapter is connected to the personal computer and the personal computer is in a state which power supply from the AC adapter is not suspended. The AC adapter shifts into the standby power reduction mode when the AC adapter is connected to the personal computer and the personal computer is in a state which the power supply from the AC adapter is suspended. The foregoing arrangements allow the standby power to be reduced when no need exists to supply power to an electronic apparatus such as a personal computer, so that the AC adapter can reduce power consumption regardless of whether in a stand-alone configuration or a configuration connected to an electronic apparatus.

### [b] Second Embodiment

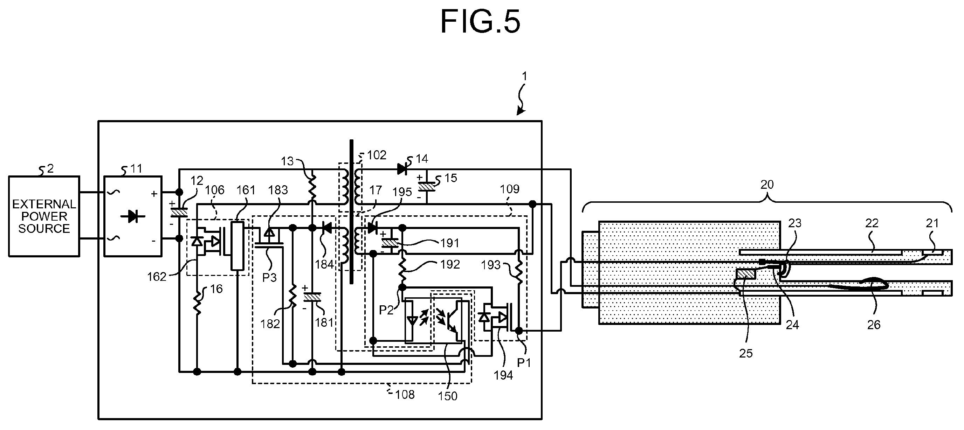

FIG. 5 is a circuit diagram illustrating an AC adapter according to a second embodiment. This AC adapter 1 in the second embodiment achieves the functions of the elements in the first embodiment with the circuit illustrated in FIG. 5.

The AC adapter 1 includes a rectifier diode 11, a capacitor 12, a resistor 13, a diode 14, a capacitor 15, and a resistor 16. The AC adapter 1 further includes transformers 102 and 17, each including a primary coil and a secondary coil. Additionally, an integrated circuit (IC) 161 and a switch 162 according to the second embodiment form an exemplary circuit that achieves the functions of the switching unit 106 illustrated in FIG. 1. Additionally, a capacitor 181, a resistor 182, a switch 183, and a diode 184 according to the second embodiment form an exemplary circuit that achieves the functions of the control unit 108 illustrated in FIG. 1. A capacitor 191, a resistor 192, a resistor 193, and a switch 194 according to the second embodiment form an exemplary circuit that achieves the functions of the detection unit 109 illustrated in FIG. 1. Additionally, a control unit 108 and a detection unit 109 are connected to each other through optical communication by a photocoupler 150.

The rectifier diode 11 rectifies and outputs alternating current electricity input from an external power source 2 such as a home power source. The capacitor 12 smoothes the electricity output from the rectifier diode 11. The electricity output from the rectifier diode 11 thereafter flows through the primary coil of the transformer 102. The resistor 16 is a load on the electricity output from the rectifier diode 11.

It is noted that the switch 162 is disposed on a path of the electricity output from the rectifier diode 11. Thus, when the switch 162 is OFF, no electricity flows through the path of the electricity output from the rectifier diode 11. In contrast, when the switch 162 is ON, electricity flows through the path of the electricity output from the rectifier diode 11. Turning ON and OFF the switch 162 results in the alternating current electricity output from the rectifier diode 11 becoming a constant-voltage pulse current.

The rectifier diode 11, the capacitor 12, and the resistor 16 form an exemplary circuit that achieves the functions of the primary circuit 101 illustrated in FIG. 1.

The transformer 102 receives from the rectifier diode 11 an input of the alternating current electricity to the primary coil. The transformer 102 reduces the voltage of the alternating current electricity input to the primary coil to an input voltage and outputs the input voltage from the secondary coil.

The diode 14 allows electricity to flow from the secondary coil of the transformer 102 only in a direction toward the DC input pin 26. Through this function, the diode 14 converts the electricity to be input to the DC input pin 26 from an alternating current into a direct current. The capacitor 15 smoothes electricity output from the diode 14.

In this manner, the diode 14 and the capacitor 15 supply the direct current electricity to the DC input pin 26 to thereby supply electricity to the personal computer 3. Thus, the diode 14 and the capacitor 15 form an exemplary circuit that achieves the functions of the main power source 103 illustrated in FIG. 1.

A terminal of the secondary coil of the transformer 102 opposite to the direction in which the diode 14 allows a current to flow is connected to the GND pin 22. Specifically, the terminal opposite to the direction in which the diode 14 of the secondary coil of the transformer 102 allows the current to flow is connected to the GND 34 of the personal computer 3 when the connector 20 and the connector 30 are connected to each other. As a result, the voltage of a path that connects the transformer 102 to the GND pin 22 is reduced to the reference potential of the GND 34 when the connector 20 is connected to the connector 30.

The switch 162 is an N-type field effect transistor (FET) switch. Specifically, the switch 162 turns ON when a gate voltage becomes High and turns OFF when the gate voltage becomes Low. The switch 162 connects and disconnects a path that connects the external power source 2 to the transformer 102. When the switch 162 is OFF, electricity input from the external power source 2 is not supplied to the transformer 102. When the switch 162 is ON, the alternating current electricity input from the external power source 2 is input to the primary coil of the transformer 102 via the rectifier diode 11.

The IC 161 repeatedly applies High and Low voltages to the gate of the switch 162, thereby repeatedly and periodically turning ON and OFF the switch 162. It is, however, noted that the IC 161 operates on electricity supplied via the switch 183 to be described later. Thus, the IC 161, without the electricity supplied thereto, stops operating, so that the gate voltage of the switch 162 remains Low. In this case, the switch 162 is OFF.

The resistor 13 is disposed on a path that branches off from the path through which electricity is fed from the rectifier diode 11 to the primary coil of the transformer 102. The electricity that is fed from the rectifier diode 11 to the transformer 102 flows through the resistor 13. The resistor 13 forms an exemplary circuit that achieves the function of the auxiliary power source 104 illustrated in FIG. 1. Additionally, in this case, a ground with respect to the electricity input from the external power source 2 achieves the function of the GND 107.

The diode 184 is a rectifying element that allows the electricity input from the external power source 2 to flow in a constant direction. The capacitor 181 smoothes electricity that flows through the diode 184. The resistor 182 is disposed on a path that connects a gate and a source of the switch 183.

The switch 183 is a P-type FET switch. Specifically, the switch 183 turns ON when a gate voltage becomes Low and turns OFF when the gate voltage becomes High. The switch 183 has a drain connected to the IC 161. The switch 183 has a source connected to a path that branches off from a path connecting the diode 184 to the resistor 13. Additionally, the switch 183 has a gate connected to an output terminal of a light receiving element of the photocoupler 150.

When the light receiving element of the photocoupler 150 is OFF, the gate of the switch 183 is disconnected from the ground of the external power source 2. Because of a potential difference generated by the resistor 182 between the gate and the source of the switch 183, a High gate voltage is applied to the gate of the switch 183. This turns ON the switch 183. When the light receiving element of the photocoupler 150 is ON, the gate of the switch 183 is connected to the ground of the external power source 2. Because of an identical potential developing in the gate and the source, a Low gate voltage is applied to the gate of the switch 183. This turns OFF the switch 183.

The transformer 102 includes the primary coil that is disposed in series with the diode 184 and the resistor 13 disposed on the path of the electricity input from the external power source 2. The secondary coil of the transformer 17 has a first end connected to a path that connects the secondary coil of the transformer 102 to the GND pin 22. The foregoing arrangements result in the secondary coil of the transformer 17 being connected to the GND 34 of the personal computer 3 via the GND pin 22 when the connector 20 is connected to the connector 30.

As described above, both the secondary coil of the transformer 102 and the secondary coil of the transformer 17 are connected to the GND 34 of the personal computer 3 and use the potential of the GND 34 as the reference potential. Specifically, in the second embodiment, the GND 34 has the function of the GND 110 illustrated in FIG. 1.

The transformer 17 is an exemplary circuit that achieves the function of the auxiliary power source 105 illustrated in FIG. 1. The transformer 17 reduces the voltage of electricity input to the primary coil to a predetermined voltage and outputs the predetermined voltage from the secondary coil. The transformer 17 inputs electricity to a source of the switch 194 and a light emitting element of the photocoupler 150. Furthermore, the transformer 17 inputs electricity to a gate of the switch 194.

A diode 195 rectifies electricity output from the transformer 17. The capacitor 191 smoothes electricity output from the transformer 17. The resistor 193 is disposed on a path that connects the secondary coil of the transformer 17 to the gate of the switch 194. The resistor 193 has a resistance value considerably higher than a resistance value of the resistor 25. The resistor 192 is disposed on a path that connects the secondary coil of the transformer 17 to an input terminal of the light emitting element of the photocoupler 150.

The switch 194 is an N-type FET switch. Specifically, the switch 194 turns ON when the gate voltage becomes High and turns OFF when the gate voltage becomes Low. The switch 194 has the source and a drain connected to the secondary coil of the transformer 17. Additionally, the switch 194 has the gate connected to a path that connects an input path from the control contact pin 23 to an input path from the secondary coil of the transformer 17.

When the connector 20 is connected to the connector 30, the control contact pin 23 is connected to the GND 34 of the personal computer 3 via the resistor 25 and the GND pin 22. Because the resistor 25 has a resistance value considerably lower than the resistance value of the resistor 193, the connection of the connector 20 to the connector 30 causes the potential of the control contact pin 23 to be reduced to ground. This causes the gate voltage of the switch 194 to become Low. As a result, the switch 194 turns OFF. When a High switch control signal is output from the control contact pin 23, a High gate voltage is applied to the gate of the switch 194. This turns ON the switch 194.

When the connector 20 is not connected to the connector 30, the control contact pin 23 leaves the contact portion 24 to be open. A signal input from the control contact pin 23 and the control signal pin 21 to the gate of the switch 194 becomes variable. In this case, a voltage output from the secondary coil of the transformer 17 is applied to the gate of switch 194. Thus, a High voltage is applied to the gate of the switch 194. This turns ON the switch 194.

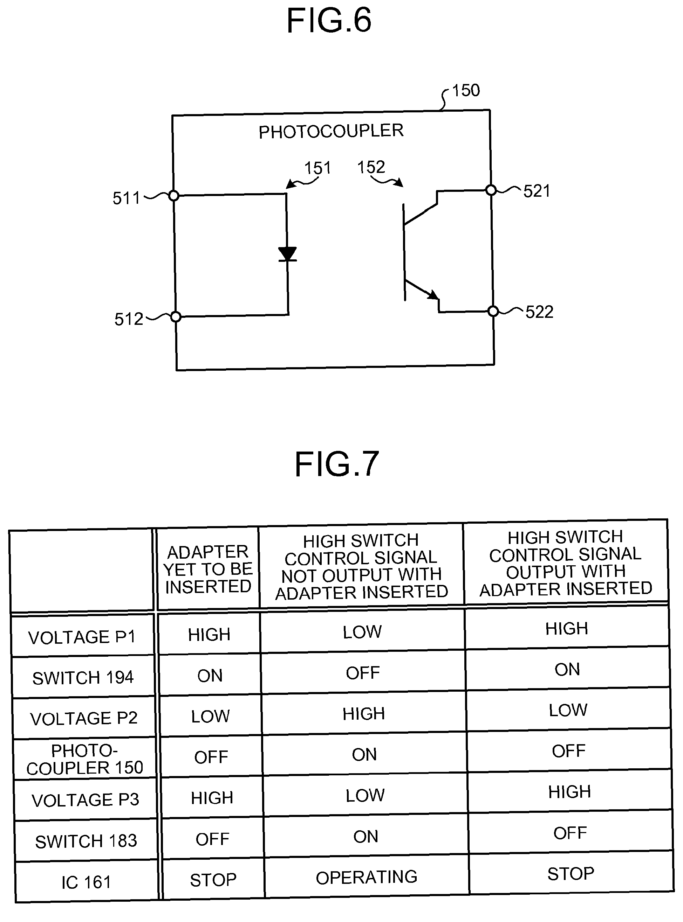

FIG. 6 is a diagram illustrating details of the photocoupler. The photocoupler 150 includes a light emitting diode 151 as a light emitting element. The photocoupler 150 also includes a phototransistor 152 as a light receiving element.

The light emitting diode 151 has an input terminal 511 connected to an output side of the diode 195. The light emitting diode 151 has an output terminal 512 connected to a terminal of the secondary coil of the transformer 17 opposite to the direction in which the diode 195 allows a current to flow.

The phototransistor 152 has an input terminal 521 connected to a path that extends from the switch 183. The phototransistor 152 has an output terminal 522 connected to a path through which electricity output from the rectifier diode 11 flows.

When a current flows from the input terminal 511 to the output terminal 512, the light emitting diode 151 emits light. The phototransistor 152, having received the light emitted from the light emitting diode 151, turns ON. When the phototransistor 152 turns ON, a current flows from the input terminal 521 to the output terminal 522. The use of the light emitting diode 151 and the phototransistor 152 as described above establishes a connection between the control unit 108 and the detection unit 109 through optical communication.

When the connector 20 is connected to the connector 30 and the microcomputer 31 does not output a High switch control signal, in other words, when the switch 194 is OFF, the voltage of the input terminal 511 of the light emitting diode 151 becomes High and a current flows through the light emitting diode 151. In this case, the photocoupler 150 turns ON and the phototransistor 152 allows a current to flow. When the photocoupler 150 turns ON, the switch 183 turns ON and the IC 161 effects a shift into the ordinary power supply mode.

When the connector 20 is connected to the connector 30 and the microcomputer 31 outputs a High switch control signal, in other words, when the switch 194 is ON, the voltage of the input terminal 511 of the light emitting diode 151 becomes Low and no current flows through the light emitting diode 151. In this case, the photocoupler 150 turns OFF and the phototransistor 152 does not allow a current to flow. When the photocoupler 150 turns OFF, the switch 183 turns OFF and the IC 161 stops operating and a shift into the standby power reduction mode is effected.

When the connector 20 is not connected to the connector 30, in other words, when the switch 194 is ON, the voltage of the input terminal 511 of the light emitting diode 151 becomes Low and no current flows through the light emitting diode 151. In this case, the photocoupler 150 turns OFF and the phototransistor 152 does not allow a current to flow. When the photocoupler 150 turns OFF, the switch 183 turns OFF and the IC 161 stops operating and a shift into the standby power reduction mode is effected.

FIG. 7 is a table that summarizes voltages and ON/OFF positions of the switches and the photocoupler, and operations of the IC. Conditions compared include: the adapter-yet-to-be-inserted condition; the High switch control signal is not output under the adapter-inserted condition; and the High switch control signal is output under the adapter-inserted condition. In the following description, the gate voltage of the switch 194 is denoted as a voltage P1; the voltage of the input terminal 511 of the photocoupler 150 is denoted as a voltage P2; and the gate voltage of the switch 183 is denoted as a voltage P3.

Under the adapter-yet-to-be-inserted condition, the voltage P1 becomes High and the switch 194 turns ON. When the switch 194 turns ON, the voltage P2 becomes Low and the photocoupler 150 turns OFF. When the photocoupler 150 turns OFF, the voltage P3 becomes High and the switch 183 turns OFF. Thus, under the adapter-yet-to-be-inserted condition, the IC 161 stops operating and a shift into the standby power reduction mode is effected.

When the High switch control signal is not output from the microcomputer 31 under the adapter-inserted condition, the voltage P1 becomes Low and the switch 194 turns OFF. When the switch 194 turns OFF, the voltage P2 becomes High and the photocoupler 150 turns ON. When the photocoupler 150 turns ON, the voltage P3 becomes Low and the switch 183 turns ON. Thus, when the High switch control signal is not output from the microcomputer 31 under the adapter-inserted condition, the IC 161 turns ON and OFF the switch 162 and a shift into the ordinary power supply mode is effected.

When the High switch control signal is output from the microcomputer 31 under the adapter-inserted condition, the voltage P1 becomes High and the switch 194 turns ON. When the switch 194 turns ON, the voltage P2 becomes Low and the photocoupler 150 turns OFF. When the photocoupler 150 turns OFF, the voltage P3 becomes High and the switch 183 turns OFF. Thus, when the High switch control signal is output from the microcomputer 31 under the adapter-inserted condition, the IC 161 stops operating and a shift into the standby power reduction mode is effected.

In summary, the AC adapter according to the second embodiment, when not connected to the personal computer, is in the same condition as when a Low switch control signal is input from the personal computer and shifts into the standby power reduction mode. When the AC adapter is connected to the personal computer and the personal computer is in a state which power supply from the AC adapter is not suspended, a High switch control signal is input from the personal computer and the AC adapter shifts into the ordinary power supply mode. When the AC adapter is connected to the personal computer and the personal computer is in a state which the power supply from the AC adapter is suspended, a High switch control signal is input from the personal computer and the AC adapter shifts into the standby power reduction mode. The foregoing arrangements enable reliable reduction in power consumption.

While the AC adapter has been exemplarily described, the mechanism of each of the above-described embodiments can be applied to any other apparatus that supplies an electronic apparatus with power to achieve the same advantageous effects.

The power supply apparatus and the method for controlling a power supply apparatus according to one aspect of the embodiments disclosed in this application can achieve an advantageous effect of reducing power consumption regardless of whether in a stand-alone configuration or a configuration connected to an electronic apparatus.

## Claims

1. A power supply apparatus (1), comprising:
a power supply unit (101, 106) that supplies an electronic apparatus (3) connected to the power supply apparatus(3) with power;
a control pin (23) that is connected to a ground when the electronic apparatus (3) is connected to the power supply apparatus (3) and that, when connected to the ground (110), receives an input of a control signal output by the electronic apparatus (3);
a detection unit (109) that detects whether the control pin (23) is connected to the ground (110) and whether the control pin (23) receives the input of the control signal; and
a control unit (108) that, when the detection unit (109) detects that the control pin (23) is not connected to the ground (110) or the control pin (23) is connected to the ground (110) and receives the input of the control signal, stops an operation of the power supply unit (101, 106) and that, when the detection unit (109) detects that the control pin (23) is connected to the ground (110) and yet does not receive the input of the control signal, operates the power supply unit (101, 106).

2. The power supply apparatus (1) according to claim 1, wherein
the control pin (23) receives a high-power signal as the control signal,
when the control pin (23) is not connected to the ground (110), the detection unit (109) receives an input of the high-power signal from an operation power source(105); when the control pin (23) is connected to the ground (110) and receives the input of the control signal, the detection unit (109) receives an input of the high-power signal as the control signal via the control pin (23); and when the control pin (23) is connected to the ground (110) and yet does not receive the input of the control signal, the detection unit (109) receives an input of a low-power signal from the control pin (23), and
when the detection unit (109) receives the input of the high-power signal, the control unit (108) stops the operation of the power supply unit (101, 106) and, when the detection unit (109) receives the input of the low-power signal, the control unit (108) operates the power supply unit (101, 106).

3. The power supply apparatus (1) according to claim 1 or 2, further comprising:
a contact portion (24) that is disposed at a position opposed to the control pin (23) and that leads to the ground (110), wherein
the control pin (23) comprises a flat spring,
when the power supply apparatus (1) is connected to the electronic apparatus (3), the control pin (23) receives pressure and is brought into contact and electrically connected with the contact portion and is connected to the ground (110), and
when the power supply apparatus (1) is disconnected from the electronic apparatus (3), the control pin (23) cancels the contact with the contact portion by an elastic force.

4. The power supply apparatus (1) according to any of claims 1 to 3, wherein the control unit (108) stops the operation by stopping turning ON and OFF a switch in an electricity supply path in the power supply unit (101, 106).

5. A method for controlling a power supply apparatus (1), the method comprising:
detecting, by a control pin (23) that is connected to a ground (110) when an electronic apparatus (3) is connected to the power supply apparatus (1) and that, when connected to the ground (110), receives an input of a control signal output by the electronic apparatus (3), whether the control pin (23) is connected to the ground (110) and whether the control pin (23) receives the input of the control signal;
when the control pin (23) is not connected to the ground (110) or the control pin (23) is connected to the ground (110) and receives the input of the control signal, stopping an operation of supply of power; and
when the control pin (23) is connected to the ground (110) and yet does not receive the input of the control signal, performing the supply of power.
